## Europäisches Patentamt
## European Patent Office
## Office européen des brevets

(19)

(11) Publication number: **0 013 030**
**B1**

(12) **EUROPEAN PATENT SPECIFICATION**

(45) Date of publication of patent specification: **07.04.82**

(21) Application number: **79105393.7**

(22) Date of filing: **28.12.79**

(51) Int. Cl.³: **G 01 N 27/12,**
**G 01 D 21/02**

(54) **Temperature-humidity detecting apparatus.**

(30) Priority: **28.12.78 JP 163478/78**
**28.12.78 JP 163479/78**
**09.06.79 JP 72548/79**
**09.06.79 JP 72549/79**
**09.06.79 JP 72550/79**
**09.06.79 JP 72558/79**

(43) Date of publication of application:
**09.07.80 Bulletin 80/14**

(45) Publication of the grant of the patent:
**07.04.82 Bulletin 82/14**

(84) Designated Contracting States:
**DE FR GB**

(56) References cited:
**EPA - 79105349.9**

**CH - A - 354 270**
**GB - A - 527 686**
**US - A - 2 444 111**
**US - A - 2 684 592**
**US - A - 2 975 638**

(73) Proprietor: **Matsushita Electric Industrial Co., Ltd.**
**1006, Oaza Kadoma**
**Kadoma-shi Osaka-fu, 571 (JP)**

(72) Inventor: **Terada, Jiro**
**4-23-8, Kohzu**
**Katano-shi Osaka-fu (JP)**
Inventor: **Nitta, Tsuneharu**
**2-15-8, Myokenzaka**
**Katano-shi Osaka-fu (JP)**

(74) Representative: **Eisenführ & Speiser**
**Martinistrasse 24**
**D-2800 Bremen 1 (DE)**

Courier Press, Leamington Spa, England.

## Temperature-humidity detecting apparatus

The present invention relates to a temperature-humidity detecting apparatus for use in detection of the moistures and temperatures of an air conditioning machine, a drying machine or a cooker.

Generally, humidity detecting resistor elements are used for moisture detection and thermoelectric couples or thermistors are used for temperature detection. The humidity detecting resistor is sensitive to the humidity to vary the resistance value and is used as a humidity measuring element or as a sensor for humidity regulating application. As is known, the humidity detecting resistor is made of metallic oxides, superior in moisture absorption, such as $Fe_2O_3$, $Al_2O_3$, etc. In most cases, the various appliances require to detect not only the humidity, but also the temperature. The air conditioning facilities are required to simultaneously control pleasant temperatures and health humidity. Accordingly, in those cases both a temperature detecting element and a humidity detecting element were used to detect the temperature and the humidity, and the respective circuits were constructed independently to provide the two-system circuit structure to meet the requirement, resulting in that the circuit construction became complicated, thus resulting in higher cost.

An example of a prior art apparatus can be taken from GB - A - 527 686 which discloses a humidity sensing element in which metallic oxide is held between two flat metallic electrodes. Thus, this known element can be used either as an independent humidity detection means or as one of two systems in a combined two system arrangement for detecting humidity and temperature. Another prior art example of a humidity detecting device is disclosed in US - A - 2 684 592. This document describes an electrical temperature compensation for a humidity detecting apparatus. Again, the disclosed device can only be used independently for detecting humidity or in combination with a temperature sensitive element as described above. A still further humidity detecting element and apparatus are described in the copending European patent application 79 105 349.9 (Publication number 0 013 022). This document teaches the use of a metal oxide ceramic element, for example $BaTiO_3$ and $SrTiO_3$, with electrodes, a load impedance and a source of oscillating power for detecting environmental humidity. Again the disclosed element and apparatus were designed for the sole purpose of humidity detection.

Accordingly, a principal object of the present invention is to provide an apparatus which is free from the conventional disadvantages and can control the temperature and humidity by a single element.

Another object of the present invention is to provide a temperature-humidity detecting apparatus which can vary the power supply frequency applied upon a metal oxide ceramic element to detect temperature and humidity at the same time.

According to the present invention a temperature-humidity detecting apparatus includes a metal oxide ceramic element with electrodes, a load impedance and a source of oscillating power in which the metal oxide ceramic element is composed of a dielectric with a large temperature dependence of its dielectric constant and a large variation in its resistance value upon vapor absorption, whereby it varies in impedance in accordance with variations in atmospheric temperature and humidity, in which the source of oscillating power is connected in series with said electrodes and said load impedance and is adapted to supply power at different frequencies and in which the load impedance is designed to selectively vary its impedance in accordance with variations in frequency.

These and other objects, features, aspects and advantages of the present invention will become more apparent from the following detailed description of the present invention when taken in conjunction with the accompanying drawings in which;

Fig. 1 is a perspective view showing a temperature-humidity detecting element of the present invention;

Fig. 2 shows the humidity detecting characteristics of the temperature-humidity detecting element in one embodiment of the present invention;

Fig. 3 shows a temperature characteristic graph of the temperature-humidity detecting element in one embodment;

Fig. 4 shows a frequency characteristic graph of the temperature-humidity detecting element in the one embodiment;

Fig. 5 shows a temperature characteristic graph with the variations of the component included in the temperature-humidity detecting element;

Fig. 6 shows a humidity detection characteristic graph with the variations of the component included in the temperature-humidity detecting element;

Fig. 7 shows a humidity detection characteristic graph upon the variations of electric impedance applied to the temperature-humidity detecting element in another embodiment of the present invention;

Fig. 8 shows a temperature characteristic graph upon the variations of electric impedance applied to the temperature-humidity detecting element in the other embodiment;

Fig. 9 shows a frequency characteristic graph upon the variation of electric impedance applied to the temperature-humidity detecting element in the other embodiment;

2

Fig. 10 shows a humidity detection characteristic graph upon the variations of electric impedance applied to the temperature-humidity detecting element in a further embodiment of the present invention;

Fig. 11 shows a temperature detection characteristic graph upon the variations of electric impedance applied to the temperature-humidity detecting element in the further embodiment;

Fig. 12 shows a frequency characteristic graph upon the variations of the electric impedance applied to the temperature-humidity detecting element in the further embodiment;

Fig. 13 is an electric circuit diagram of a temperature-humidity detecting apparatus in one embodiment of the present invention; and

Fig. 14 is a similar view to Fig. 13 showing another embodiment of the temperature-humidity detecting apparatus.

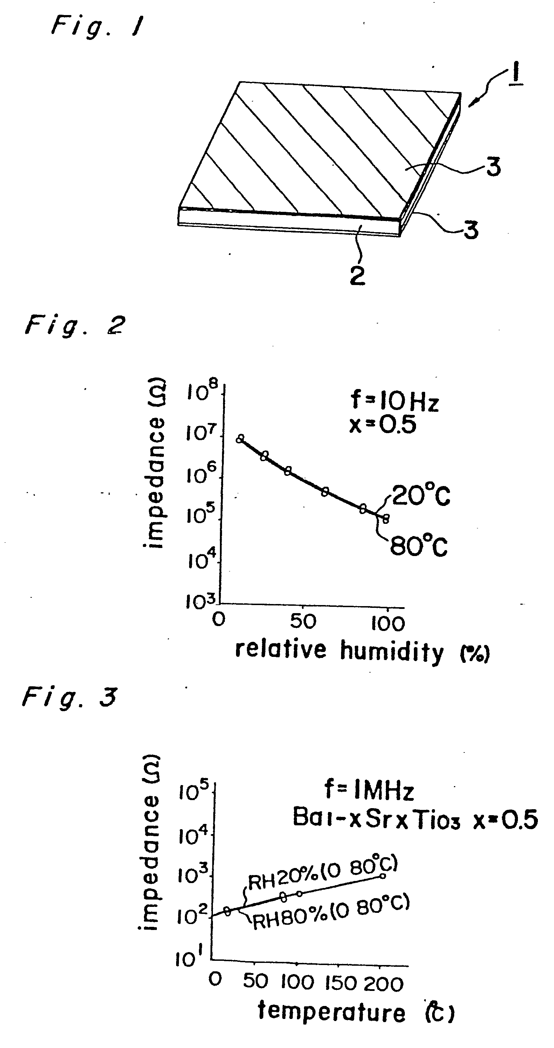

According to the present invention, as starting raw materials for the temperature-humidity detecting element, a component which was composed of $BaCO_3$ 0.5 by mol, $TiO_2$ 1 by mol and $SrCO_3$ 0.5 by mol, was wet mixed and dried into powder. The resultant powdered material was molded into a molding 4 $\times$ 4 $\times$ 0.25 mm under molding pressure of 735 bar. Thereafter, the molding was fired at the temperature of 1,250°C, and a pair of electrodes 3 and 3 of $RuO_2$ series were mounted on the fired product of the metal oxide ceramic 2, as shown in Fig. 1, to provide an element 1. The oxide ceramic 2 of specimen element 1 was examined, in terms of humidity characteristics, temperature characteristics and frequency-electric impedance characteristics between the electrodes 3 and 3 thereof. The results are shown in Fig. 2, Fig. 3 and Fig. 4.

Fig. 2 shows that the electric impedance varies with the varying relative humidity in the low frequency zone (10 Hz) and the temperature variation (20°C and 80°C) hardly influences the variation in the electric impedance.

Fig. 3 shows that the electric impedance varies with the varying temperatures in the high frequency zone (1 MHz) and the humidity variation (20% and 80%) hardly influences the variation in the electric impedance.

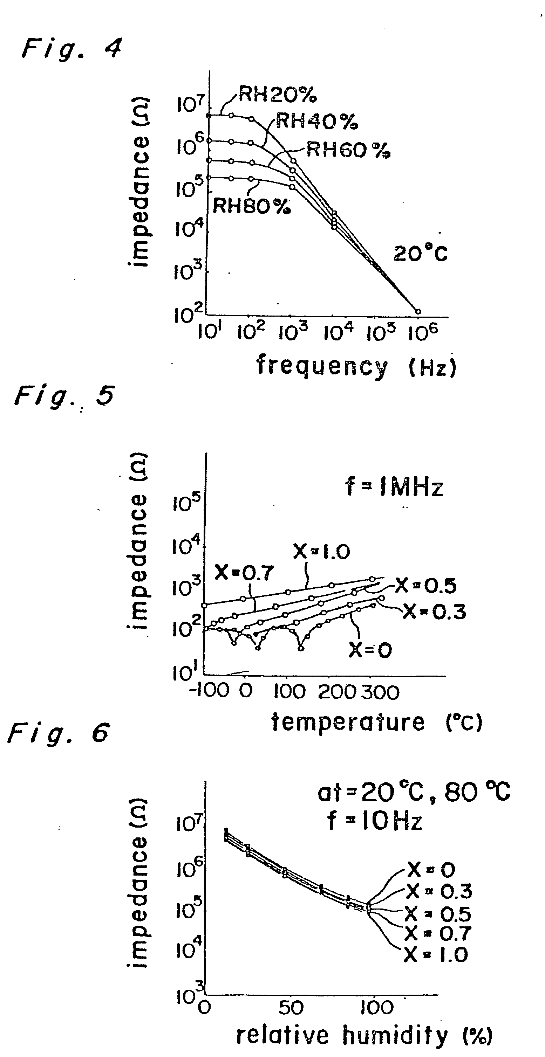

Fig. 4 shows that the variation in the humidity (20%, 40%, 60% and 80%) influences the electric impedance in the low frequency zone ($10^3$ Hz), but the variation in the humidity hardly influences the electric impedance in the high frequency zone ($10^5$ Hz).

The results shown in Fig. 2 through Fig. 4 show that both the humidity and the temperature can be detected by a single specimen element 1. In other words, the humidity can be detected in the low frequency zone with respect to the element 1 and the temperature can be detected in the high frequency zone.

The value of x in $(Ba_{1-x}Sr_x)TiO_3$ component in the element 1 was variably changed within the range of 0 through 1 to examine the temperature-impedance characteristics and the humidity-impedance characteristics and the results are obtained as shown in Fig. 5 and Fig. 6, when x was 0, 0.3, 0.5, 0.7 and 1.0 in $(Ba_{1-x}Sr_x)TiO_3$.

According to Fig. 5, the relationship between the temperature and the impedance is approximately linear in logarithmic scale of the impedance when x in $(Ba_{1-x}Sr_x)TiO_3$ is 0.5 or more at the temperatures of 0°C or more, while, the peaks appear at different temperatures due to the value of x within the range of x = 0 to 1. These peaks are curie points for $(Ba_{1-x}Sr_x)TiO_3$, so that the range of the temperature detection, i.e. the desired detection temperature range can be obtained at the temperature of the curie point or higher with the linear relationship between the temperature and impedance.

Fig. 6 shows that the characteristic variations are hardly recognised due to X = 0 to 1, and the variation in the temperature hardly influences the variation in the impedance. The results of Fig. 6 was obtained on the application of 10 Hz.

The composition of the temperature-humidity detecting element is not restricted to the component of the $Ba_{1-x}Sr_xTiO_3$ (x = 0 to 1). Addition of one type of plural types of compounds such as $MgCr_2O_4$, $CaTiO_3$, $BaZrO_3$, the other perovskite type, tungsten bronze type, pyrochlore type, spinel type and metal oxides to the $Ba_{1-x}Sr_xTiO_3$ can provide an element, which is quicker in response, extremely less in characteristic deterioration, higher in sensitivity, and superior in the temperature and humidity separation during the detection of the temperature and the humidity.

Also, the element of the present invention is superior in thermal resistance, and, if and when the element is contaminated in the suspended matters in the air, the heating and cleaning operations can be performed to remove the contamination.

The temperature-humidity detecting element with electrode faces disposed on the metal oxide ceramic having, as major component, the component shown in $PbXO_3$, will be described hereinafter in another embodiment of the present invention. As in the temperature-humidity detecting element with the above-described $Ba_{1-x}Sr_xTiO_3$ component as major component, a starting material, which was composed of PbO, MgO and $Nb_2O_5$, was wet-mixed and thereafter dried into powder. The resultant powdered material was molded under molding pressure of 735 bar into a molding of 4 $\times$ 4 $\times$ 0.25 mm and a metal oxide ceramic of $Pb(Mg_{1/3}Nb_{2/3})O_3$ was produced as a sintered product 2 as shown in Fig. 1. Then, $RuO_2$ seies electrode paste was applied on the sintered product 2 and was baked at 800°C to form the electrodes 3 and 3 thereby to construct a temperature-humidity detecting element 1.

3

**0 013 030**

Even in the other composition shown in the $PbXO_3$, the same thing can be applied to provide the temperature-humidity detecting element.

The characteristics of the temperature-humidity detecting element with the $Pb(Mg_{1/3}Nb_{2/3})O_3$ as major component will be described hereinafter according to the experiment results.

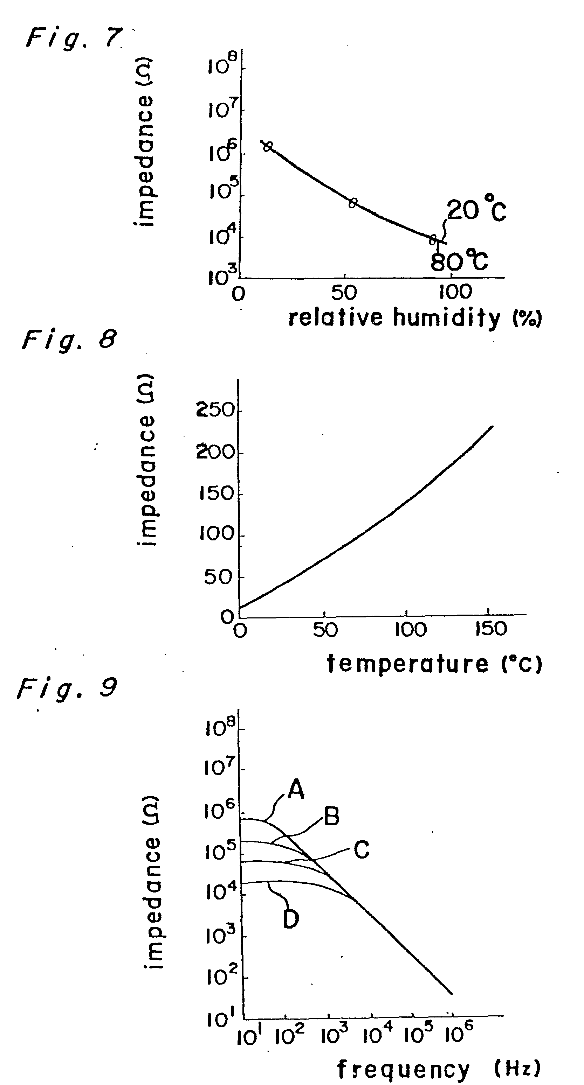

The graph of Fig. 7 shows the variations in the electric impedance accompanied by the variations in the relative humidity of the temperature-humidity detecting element when the low frequency power supply of 10 Hz—IV has been applied between the electrodes 3 and 3 at the temperature of 20°C. The electric impedance decreases with the increasing humidity. Also, according to the chartacteristic experiments performed at the temperature of 80°C under the conditions of the same impressed power supply, no influences result due to the difference in temperatures. The result shows that, in the temperature-humidity detecting element, the variation in the electric impedance depends upon the humidity only under the conditions where the low frequency power supply has been applied to the element.

The graph of Fig. 8 shows the variations in the electric impedance of the temperature-humidity detecting element accompanied through the variation in the temperature when the high frequency power supply of 1,000 KHz—1V has been applied between the electrode 3 and 3 at the humidity 50% RH. The electric impedance varies in accordance with the variation in the temperature, and the characteristics remains almost unchanged even when the relative humidity has been made 20% (0 to 80°C) and 80% (0 to 80°C) under the conditions of the same impressed power supply. The graph of Fig. 9 shows the frequency-electric impedance characteristic at the temperature of 20°C where the humidity has been made a parameter in such a manner that reference character A shows characteristics at 20% RH, B at 40% RH, C at 60% RH and D at 80% RH, respectively, in humidity. No influences through the humidity variation in Fig. 9 are provided in the high frequency zone.

The above experiment results show that, in the temperature-humidity detecting element of the present invention, the variation in the electric impedance depends upon the humidity under the low frequency power supply impressing conditions and the variations in the electric impedance depends upon the temperature under the high frequency power supply impressing conditions.

Although in the above-described embodiment, the component of $Pb(Mg_{1/3}Nb_{2/3})O_3$ is employed, however, the temperature-humidity detecting element is not restricted in construction to the above component. The experiments show that the same effect is provided even in a case where the component shown in $PbXO_3$ is used as major component, wherein, the X shall be component containing at least one of $(Mg_{1/2}W_{1/2})$, $(Cd_{1/2}W_{1/2})$, $(Co_{1/2}W_{1/2})$, $(Sc_{1/2}Nb_{1/2})$, $(Fe_{1/2}Nb_{1/2})$, $(In_{1/2}Nb_{1/2})$, $(Yb_{1/2}Nb_{1/2})$, $(Ho_{1/2}Nb_{1/2})$, $(Fe_{1/2}Ta_{1/2})$, $(Sc_{1/2}Ta_{1/2})$, $(Lu_{1/2}Nb_{1/2})$, $(Lu_{1/2}Ta_{1/2})$, $(Zn_{1/3}Nb_{2/3})$, $(Co_{1/3}Nb_{2/3})$, $(Ni_{1/3}Nb_{2/3})$, $(Mg_{1/3}Ta_{2/3})$, $(Co_{1/3}Ta_{2/3})$, $(Ni_{1/3}Ta_{2/3})$, $(Fe_{2/3}W_{1/3})$, $(Mn_{2/3}W_{1/3})$.

The experiment results are shown in Table 1 about the temperatrue and humidity characteristics of each of the temperature-humidity detecting elements.

4

# 0013030

## TABLE 1

| Major Component | Temperature charac-teristics ($\Omega$) | | Humidity charac-teristics ($\Omega$) | |
|---|---|---|---|---|
| | 50% RH 1MHz | | at 20°C 10 Hz | |
| | 20°C | 150°C | 20% RH | 80% RH |
| 1 $Pb(Mg_{1/2}W_{1/2})O_3$ | $3.8 \times 10^3$ | $7 \times 10^3$ | $2.1 \times 10^7$ | $4.1 \times 10^5$ |
| 2 $Pb(Cd_{1/2}W_{1/2})O_3$ | $4.0 \times 10^3$ | $1.8 \times 10^3$ | $2.0 \times 10^7$ | $1.5 \times 10^5$ |
| 3 $Pb(Co_{1/2}W_{1/2})O_3$ | $2.8 \times 10^3$ | $1.5 \times 10^3$ | $2.5 \times 10^7$ | $7.5 \times 10^5$ |
| 4 $Pb(Sc_{1/2}Nb_{1/2})O_3$ | $5.6 \times 10^2$ | $1.0 \times 10^2$ | $7.0 \times 10^6$ | $5.0 \times 10^4$ |
| 5 $Pb(Fe_{1/2}Nb_{1/2})O_3$ | $1.8 \times 10^2$ | $2.5 \times 10^1$ | $3.0 \times 10^6$ | $3.4 \times 10^4$ |
| 6 $Pb(In_{1 2}Nb_{1 2})O_{3 )}$ | $9.3 \times 10^2$ | $5.0 \times 10^2$ | $1.6 \times 10^7$ | $5.9 \times 10^4$ |
| 7 $Pb(Yb_{1/2}Nb_{1/2})O_3$ | $1.5 \times 10^4$ | $4.6 \times 10^3$ | $4.6 \times 10^7$ | $1.0 \times 10^5$ |
| 8 $Pb(Ho_{1/2}Nb_{1/2})O_3$ | $3.5 \times 10^3$ | $1.8 \times 10^3$ | $3.2 \times 10^7$ | $1.0 \times 10^5$ |
| 9 $Pb(Fe_{1/2}Ta_{1/2})O_3$ | $1.4 \times 10^2$ | $5.6 \times 10^2$ | $6.0 \times 10^6$ | $5.0 \times 10^4$ |
| 10 $Pb(Sc_{1/2}Ta_{1/2})O_3$ | $1.8 \times 10^2$ | $5.6 \times 10^2$ | $4.3 \times 10^6$ | $3.0 \times 10^4$ |
| 11 $Pb(Lu_{1/2}Nb_{1/2})O_3$ | $4.0 \times 10^3$ | $2.2 \times 10^3$ | $2.1 \times 10^7$ | $2.0 \times 10^5$ |
| 12 $Pb(Lu_{1/2}Ta_{1/2})O_3$ | $4.6 \times 10^3$ | $2.8 \times 10^3$ | $5.2 \times 10^7$ | $2.1 \times 10^5$ |
| 13 $Pb(Mg_{1/3}Nb_{2/3})O_3$ | $3.0 \times 10^1$ | $2.2 \times 10^2$ | $8.9 \times 10^5$ | $2.2 \times 10^4$ |
| 14 $Pb(Zn_{1/3}Nb_{2/3})O_3$ | $1.4 \times 10^2$ | $1.4 \times 10^1$ | $1.1 \times 10^6$ | $9.9 \times 10^3$ |
| 15 $Pb(CO_{1/3}Nb_{2/3})O_3$ | $6.0 \times 10^1$ | $8.0 \times 10^1$ | $1.2 \times 10^6$ | $2.1 \times 10^4$ |
| 16 $Pb(Ni_{1/3}Nb_{2/3})O_3$ | $4.0 \times 10^2$ | $1.1 \times 10^3$ | $9.5 \times 10^6$ | $2.0 \times 10^5$ |
| 17 $Pb(Mg_{1/3}Ta_{2/3})O_3$ | $9.3 \times 10^1$ | $1.4 \times 10^3$ | $8.8 \times 10^6$ | $1.1 \times 10^5$ |
| 18 $Pb(Co_{1/3}Ta_{2/3})O_3$ | $1.4 \times 10^1$ | $9.1 \times 10^1$ | $8.2 \times 10^6$ | $9.1 \times 10^3$ |
| 19 $Pb(Ni_{1/3}Ta_{2/3})O_3$ | $3.1 \times 10^2$ | $2.0 \times 10^2$ | $9.1 \times 10^6$ | $1.2 \times 10^5$ |
| 20 $Pb(Fe_{2/3}W_{1/3})O_3$ | $1.4 \times 10^2$ | $5.6 \times 10^2$ | $7.8 \times 10^6$ | $6.8 \times 10^4$ |
| 21 $Pb(Mn_{2/3}W_{1/3})O_3$ | $1.5 \times 10^2$ | $7.3 \times 10^1$ | $1.4 \times 10^7$ | $2.9 \times 10^4$ |

The composition of the temperature·humidity detecting element is not restricted to the component of the $PbXO_3$. Addition of one type or plural types of compounds such as $BaTiO_3$, $SrTiO_3$, $PbTiO_3$, $CaTiO_3$, $PbZrO_3$, $KNbO_3$, $NaNbO_3$, $LiNbO_3$, $LiTaO_3$, $Pb(Mg_{1/3}Nb_{2/3})O_3$ and the other perovskite type, tungsten bronze type, pyrochlore type, spinel type and metallic oxides to the $PbXO_3$ can provide an element, which is quicker in response, extremely less in characteristic deterioration, higher in sensitivity, and superior in the temperature and humidity separation during the detection of the temperature and the humidity. The other filling materials can be added to the element to control the characteristics so that the higher sensitivity may be provided within a limited humidity or temperature detecting range. Also, the element of the present invention is superior in thermal resistance, and, if and when the element is contaminated with the suspended matters in the air, the heating and cleaning operation can be performed to remove the contamination. In addition, the element is not restricted, in size, shape and construction, to the above-described embodiment and various sizes and shapes can be provided.

5

The further embodiment of the present invention is a temperature·humidity detecting element with electrode faces disposed on the metal oxide ceramic having the components represented in $ABO_3$ as major component, within AB is a component containing at least one from among KTa, PbHf, LiTa, LiNb, CaTi, PbZr, NaNb, MgTi, BaZr, CaZr, SrZr, MgZr, KNb and PbTi. In the embodiment, a starting material, which was composed of PbO and $TiO_2$, was wet-mixed and thereafter was dried into powder. The resultant powdered material was molded under molding pressure of 735 bar into a molding $4 \times 4 \times 0.25$ mm and was fired at 1,150°C for two hours thereby to produce the metal oxide ceramic of $PbTiO_3$ as a sintered product 2 as in Fig. 1. Then, $RuO_2$ series electrode paste was applied on the sintered product 2 for baking operation at 800°C, and electrodes 3 and 3 were formed to obtain a temperature·humidity detecting element 1. Also, the same method described above was applied for the other materials among $KTaO_3$, $PbHfO_3$, $LiTaO_3$, $LiNbO_3$, $CaTiO_3$, $PbZrO_3$, $MgTiO_3$, $BaZrO_3$, $CaZrO_3$, $SrZrO_3$, $MgZrO_3$, $NaNbO_3$ and $KNbO_3$ to be employed as the other starting material, with the construction such that electrode faces were provided on the metal oxide ceramic with the above-described components as major component to obtain the temperature·humidity detecting element, the characteristics of which will be described hereinafter.

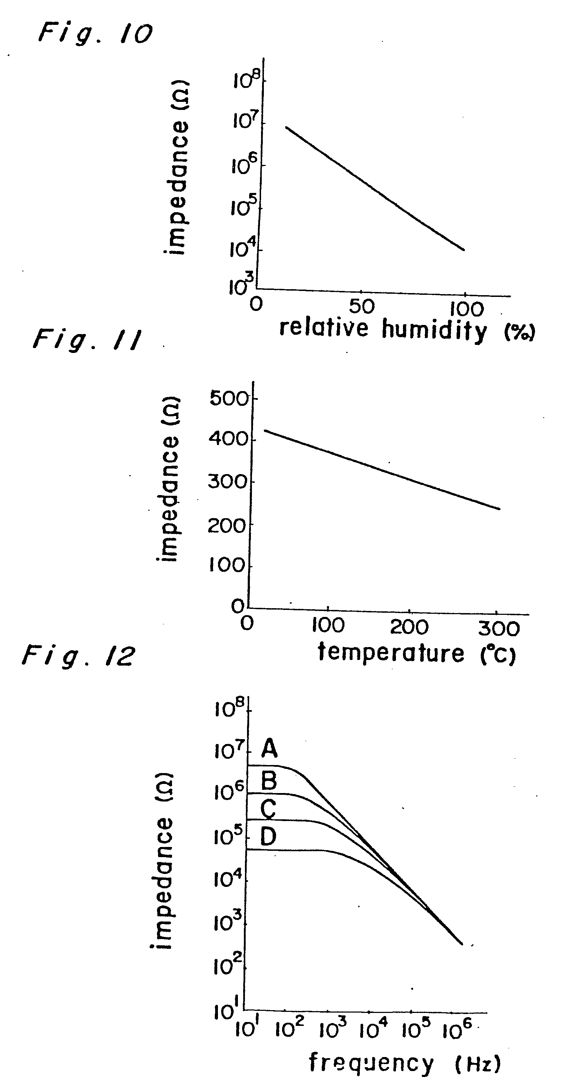

The graph of Fig. 10 shows the variations in the electric impedance accompanied by the variations in the relative humidity of the temperature-humidity detecting element when the low frequency power supply of 10 Hz—1V has been applied between the electrodes 3 and 3 at the temperature of 20°C with a result such that the electric impedance decreases with the increasing humidity. According to the characteristic experiments performed at the temperature of 80°C under the conditions of the same impressed power supply, any influence is hardly given due to difference in temperature. As a result, in the temperature·humidity detecting element, the variations in the electric impedance depends upon the humidity only under the conditions where the low frequency power supply has been impressed.

The graph of Fig. 11 shows the variations in the electric impedance of the temperature·humidity detecting element accompanied by the variations in the temperature when the high frequency power supply of 1,000 KHz—1V has been applied between the both electrodes 3 and 3 at the humidity 50% RH at the temperature of 1 to 95°C with a result such that the electric impedance varies in accordance with the variations in the temperature. Also, any variations are hardly given to the characteristics even when the relative humidity has been made 10% (0 to 80°C) and 90% (0 to 80°C) under the condition of the same impressed power supply. The graph of Fig. 12 shows the frequency-electric impedance characteristics at the temperature of 20°C when the humidity has been used as a parameter in such a manner that reference character A shows the characteristics at 20% RH, B at 40% RH, C at 60% RH, and D at 80% RH. No influences are given due to the variation in the humidity in the high frequency zone.

From the above experimental results, it is to be noted that, in the temperature·humidity detecting element, the variation in the electric impedance depends upon the humidity under the low frequency power supply impressing conditions and the variations in the electric impedance depends upon the temperature under the high frequency power supply impressing conditions.

Since the composition of the temperature·humidity detecting element is not restricted to the component of the $PbTiO_3$, $MgTiO_3$, $BaZrO_3$, $CaZrO_3$, $SrZrO_3$, $MgZrO_3$, $KTaO_3$, one type or plural types selected from among $BaTiO_3$, $SrTiO_3$, $CaTiO_3$, $PbZrO_3$, $KNbO_3$, $NaNbO_3$, $LiNbO_3$, $LiTaO_3$ and $Pb(Mg_{1/3}Nb_{2/3})O_3$ and other perovskite type, tungsten bronze type, pyrochlore type, spinel type and metallic oxides can be added to $PbXO_3$ to provide an element, which is quicker in response, extremely less in characteristic deterioration, higher in sensitivity, and superior in the temperature and humidity separation during the detection of the temperature and the humidity. The other filling materials can be added to control the characteristics so that the higher sensitivity may be provided within a limited humidity or temperature detecting range. Also, the element of the present invention is superior in thermal resistance, and if and when the element is contaminated with the suspended matters in the air, the heating and cleaning operations can be performed to remove the contamination.

It is found out by the experiments that the same results can be obtained about a temperature·humidity detecting element with composition of among $KTaO_3$, $PbHfO_3$, $LiTaO_3$, $LiNbO_3$, $CaTiO_3$, $PbZrO_3$, $NaNbO_3$, $MgTiO_3$, $BaZrO_3$, $CaZrO_3$ $SrZrO_3$ $MgZrO_3$, and $KNbO_3$ to be employed in place of $PbTiO_3$ as major component. The experimental results of the temperature and humidity characteristics of each of the temperature·humidity detecting elements will be shown hereinafter in the Table 2.

TABLE 2

| | Major Component | Temperature charac-teristics (Ω) | 50% RH (1 − 95°C) 1 MHz | Humidity charac-teristics (Ω) | at 20°C 10 Hz |
|---|---|---|---|---|---|
| | | 20°C | 150°C | 20% RH | 80% RH |
| 22 | $PbTiO_3$ | 420 | 340 | $7.4 \times 10^6$ | $7.6 \times 10^4$ |
| 23 | $KTaO_3$ | 1050 | *1750 | $1.1 \times 10^7$ | $7.5 \times 10^4$ |
| 24 | $PbHfO_3$ | 2750 | 1000 | $6.3 \times 10^6$ | $8.1 \times 10^4$ |
| 25 | $LiTaO_3$ | 2800 | 2200 | $7.8 \times 10^6$ | $6.2 \times 10^4$ |
| 26 | $LiNbO_3$ | 2800 | 2100 | $7.0 \times 10^6$ | $2.4 \times 10^4$ |
| 27 | $CaTiO_3$ | 1100 | 1750 | $9.0 \times 10^6$ | $7 \times 10^4$ |
| 28 | $PbZrO_3$ | 2900 | 1500 | $1 \times 10^7$ | $9 \times 10^4$ |
| 29 | $NaNbO_3$ | 450 | 320 | $7.2 \times 10^6$ | $3 \times 10^4$ |
| 30 | $KNbO_3$ | 320 | 700 | $9.9 \times 10^6$ | $8.1 \times 10^4$ |

remark: *at 100°C in place of 150°C.

Also, the same effects can be obtained if Ag, Ni, Zn, Cr, Pd, Au, Pt, Sn, Cu, Al, In, except for $RuO_2$ series, are applied through an electrode paste baking method, solution jetting method, evaporating method or the like as the electrode material of all the temperature-humidity detecting elements. In such method as described hereinabove, the electrode can be formed of metal oxide, semiconductor, etc. each having nickel oxide, zinc oxide and indium oxide as major component.

The element is not restricted, in size, shape and construction, to the embodiment and various sizes and shapes can be made.

Subsequently one embodiment of the temperature-humidity detecting apparatus according to the invention will be described.

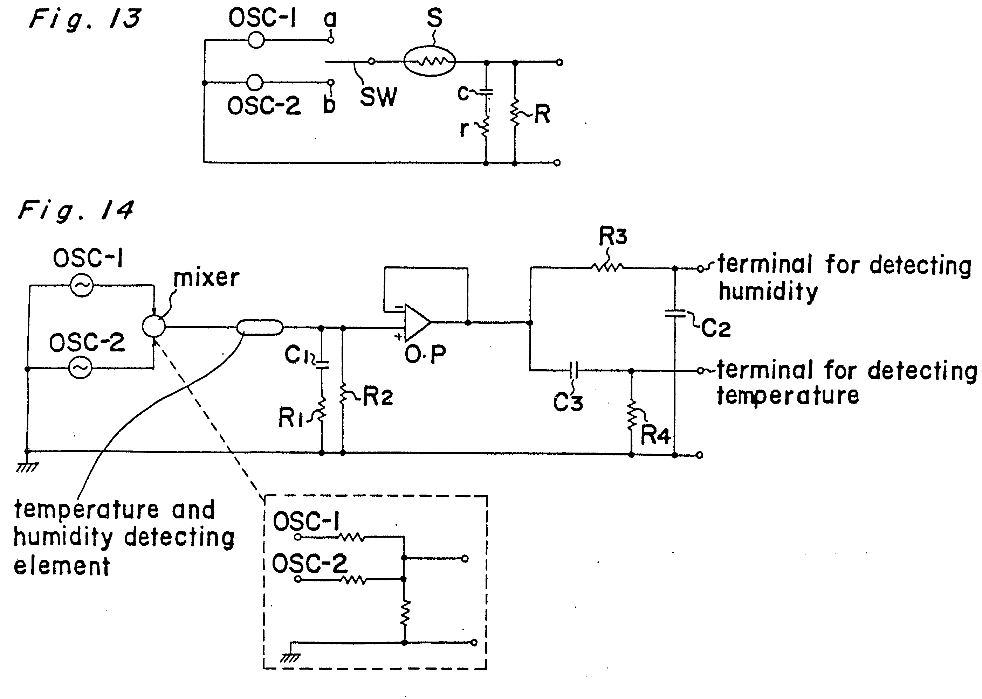

In Fig. 13, the above-described element 1 of $Ba_{0.5}Sr_{0.5}TiO_3$ series was used as the temperature-humidity detecting element S and an oscillator OSC—1 for 10 Hz—1V and an oscillator OSC—2 for 1 MHz—1V connected in parallel to each other are provided to be connected to the element S by a change-over switch SW in series. A load impedance which can select a frequency is provided with a resistor (100KΩ)R, a capacitor (1000pF)C and a resistor (1KΩ)r, whereby the capacitor connected with the resistor r in series is connected in parallel with the resistor (100KΩ)R.

When the change-over switch SW is thrown onto the "a" side, the oscillator OSC—1 is connected and an output signal is generated, in accordance with the humidity variation, at the both ends of the load impedance composed of the resistors (R, r) and the capacitor (C). When the oscillator OSC—1 side has been connected, the load impedance becomes predominant at R. Also, when the change-over switch SW is thrown onto the "b" side, the oscillator OSC—2 is connected and an output signal is generated, in accordance with the temperature variation, at the both ends of the load impedance composed of the resistors (R, r) and the capacitor (C). When the oscillator OSC—2 side has been connected the load impedance becomes predominant at r. That is to say, the load impedance which selectively varies in accordance with variations in frequency shows different values in the temperature and humidity detection. The circuit construction of the embodiment allows the detection to be made within the range of 0 to 200°C in temperature and 10 to 99% RH in humidity. As described hereinabove, the temperature-humidity detecting apparatus allows one circuit construction to detect the temperature and humidity.

Also, Fig. 14 shows another embodiment of the temperature-humidity detecting apparatus according to the present invention. In Fig. 14, the pair of oscillators OSC—1 and OSC—2 are mixed by a mixer in place of the change-over switch SW of Fig. 13, and the load impedance which selectively varies in accordance with variations in frequency is composed of resistors (R1, R2) and a capacitor (condenser) C1, so that the frequency can be set to a value the load impedance desires.

To separate the detected frequencies, a filter which is composed of, for example, the resistors R3, R4 and the capacitors (condensers) C2, C3 is provided between a pair of detecting terminals and an operational amplifier connected to the load impedance. Such circuit construction as described hereinabove can individually detect the temperature and humidity simultaneously. In other words, the detected quantity of the temperature and humidity is outputted as variation in voltage at their respective output terminals. The temperature·humidity detecting apparatus of the embodiment allows the detection to be performed within the range of 0 to 200°C in temperature and 10 to 99% RH in humidity as in the apparatus shown in Fig. 13.

As described hereinabove, the temperature·humidity detecting apparatus allows one circuit structure to detect the temperature and humidity at the same time. The apparatus for controlling the temperature and humidity of the present invention can be simplified in construction in the fields of air conditioning, weather, food industry, medical chemistry, etc., thus resulting in lower apparatus cost.

Also, it is found out by the experiments that the above-described temperature·humidity detecting apparatus of the present invention can detect the temperature and humidity with any above-described temperature·humidity detecting element.

Although the present invention has been described and illustrated in detail, it is clearly understood that the same is by way of illustration and example only and is not to be taken by way of limitation, the scope of the present invention being limited only by the terms of the appended claims.

## Claims

1. A temperature-humidity detecting apparatus including a ceramic element (1) with electrodes (3), a load impedance and a source of oscillating power, in which the ceramic element (1) is composed of a dielectric with a large temperature dependence of its dielectric constant and a large variation in its resistance value upon vapor absorption, whereby it varies in impedance in accordance with variations in atmospheric temperature and humidity, in which the source of oscillating power (OSC—1, OSC—2) is connected in series with said electrodes (3) and said load impedance (R, r, C; $R_1$, $R_2$, $C_1$) and is adapted to supply power at different frequencies, and in which the load impedance (R, r, C; $R_1$, $R_2$, $C_1$) is designed to selectively vary its impedance in accordance with variations in frequency.

2. A temperature-humidity detecting apparatus as defined in claim 1, in which said ceramic element includes a metal oxide ceramic having, as major component, a $Ba_{1-x}Sr_xTiO_3$ component in which x = 0 to 1.

3. A temperature-humidity detecting apparatus as defined in claim 1, in which said ceramic element includes a metal oxide ceramic having, as major component, a component shown in $PbXO_3$, X being a component containing at least one among $(Mg_{1/2}W_{1/2})$, $(Cd_{1/2}W_{1/2})$, $(Co_{1/2}W_{1/2})$, $(Sc_{1/2}Nb_{1/2})$,

$(Fe_{1/2}Nb_{1/2})$, $(In_{1/2}Nb_{1/2})$, $(Yb_{1/2}Nb_{1/2})$, $(Ho_{1/2}Nb_{1/2})$, $(Fe_{1/2}Ta_{1/2})$, $(Sc_{1/2}Ta_{1/2})$, $(Lu_{1/2}Nb_{1/2})$, $(Lu_{1/2}Ta_{1/2})$,

$(Mg_{1/3}Nb_{2/3})$, $(Zn_{1/3}Nb_{2/3})$, $(Co_{1/3}Nb_{2/3})$, $(Ni_{1/3}Nb_{2/3})$, $(Mg_{1/3}Ta_{2/3})$, $(Co_{1/3}Ta_{2/3})$, $(Ni_{1/3}Ta_{2/3})$, $(Fe_{2/3}W_{1/3})$,

$(Mn_{2/3}W_{1/3})$.

4. A temperature-humidity detecting apparatus as defined in claim 1, in which said ceramic element includes a metal oxide ceramic having, as major component, a component shown in $ABO_3$, AB being a component containing at least one among KTa, PbHf, LiTa, LiNb, CaTi, MgTi, BaZr, CaZr, SrZr, MgZr, PbZr, NaNb, KNb, PbTi.

## Revendications

1. Dispositif de détection de la température et de l'humidité comprenant un élément céramique (1) avec des électrodes (3), une impédance de charge, et une source d'oscillations, caractérisé en ce que l'élément céramique (1) est constitué d'un diélectrique dont la constante diélectrique dépend largement de la température et dont la valeur de la résistance dépend largement de l'absorption de vapeur, à la suite de quoi, son impédance varie en fonction de la température et de l'humidité de l'atmosphère, en ce que la source d'oscillations (OSC—1, OSC—2) est branchée en série avec les électrodes (3) et l'impédance de charge (R, r, C; $R_1$, $R_2$, $C_1$) et est prévue pour fournir différentes fréquences; et en ce que l'impédance de charge (R, r, C; $R_1$, $R_2$, $C_1$) est conçue pour avoir une valeur d'impédance variant sélectivement avec la fréquence.

2. Dispositif de détection de la température et de l'humidité selon la revendication 1, caractérisé en ce que l'élément céramique comprend une céramique en oxyde métallique comportant, comme composant principal, un composant $Ba_{1-x}Sr_xTiO_3$ dans laquel X = 0 à 1.

3. Dispositif de détection de la température et de l'humidité selon la revendication 1, caractérisé en ce que l'élément céramique comprend une céramique en oxyde métallique ayant, comme composant principal, un composant de la forme $PbXO_3$, X étant un composant contenant au moins l'un des composés suivants: $(Mg_{1/2}W_{1/2})$, $(Cd_{1/2}W_{1/2})$, $(Co_{1/2}W_{1/2})$, $(Sc_{1/2}Nb_{1/2})$, $(Fe_{1/2}Nb_{1/2})$, $(In_{1/2}Nb_{1/2})$, $(Yb_{1/2}Nb_{1/2})$, $(Ho_{1/2}Nb_{1/2})$, $(Fe_{1/2}Ta_{1/2})$, $(Sc_{1/2}Ta_{1/2})$, $(Lu_{1/2}Nb_{1/2})$, $(Lu_{1/2}Ta_{1/2})$, $(Mg_{1/3}Nb_{2/3})$, $(Zn_{1/3}Nb_{2/3})$, $(Co_{1/3}Nb_{2/3})$, $(Ni_{1/3}Nb_{2/3})$, $(Mg_{1/3}Ta_{2/3})$, $(Co_{1/3}Ta_{2/3})$, $(Ni_{1/3}Ta_{2/3})$, $(Fe_{2/3}W_{1/3})$, $(Mn_{2/3}W_{1/3})$.

4. Dispositif de détection de la température et de l'humidité selon la revendication 1, caractérisé en ce que l'élément céramique comprend une céramique en oxyde métallique ayant, comme composant principal, un composant de la forme $ABO_3$ où AB contient au moins l'un des composés suivants: KTa, PbHf,LiTa, LiNb, CaTi, MgTi, BaZr, CaZr, SrZr, MgZr, PbZr, NaNb, KNb, PbTi.

**Patentansprüche**

1. Temperatur- und Feuchtigkeits-Detektor, der ein keramisches Element (1) mit Elektroden (3), ein Belastungsimpedanz und eine Quelle zur Abgabe oszillierender Energie aufweist, bei dem das keramische Element (1) aus einem Dielektrikum mit großer Temperaturabhängigkeit seiner Dielektrizitätskonstanten und einer großen Veränderung seines Widerstandes bei der Absorption von Dampf besteht, wodurch sich seine Impedanz in Abhängigkeit von Veränderungen der Umgebungstemperatur und -feuchtigkeit ändert, bei dem die Quelle zur Abgabe oszillierender Energie (OSC—1, OSC—2) in Serie mit den Elektroden (3) und der Belastungsimpedanz (R, r, C; $R_1$, $R_2$, $C_1$) liegt und zur Energieabgabe bei unterschiedlichen Frequenzen eingerichtet ist und bei dem die Belastungsimpedanz (R, r, C; $R_1$, $R_2$, $C_1$) so ausgelegt ist, daß sie ihre Impedanz in Abhängigkeit von Frequenzänderungen ändert.

2. Temperatur- und Feuchtigkeits-Detektor nach Anspruch 1, bei dem das keramische Element eine Metalloxidkeramik aufweist, deren wesentlicher Bestandteil $Ba_{1-x}Sr_xTiO_3$ mit $x = 0$ bis 1 ist.

3. Temperatur- und Feuchtigkeits-Detektor nach Anspruch 1, bei dem das keramische Element eine Metalloxidkeramik aufweist, deren wesentlicher Bestandteil nach der Formel $PbXO_3$ gebildet ist, worin X einen oder mehrere der folgenden Ausdrücke repräsentiert $(Mg_{1/2}W_{1/2})$, $(Cd_{1/2}W_{1/2})$, $(Co_{1/2}W_{1/2})$, $(Sc_{1/2}Nb_{1/2})$, $(Fe_{1/2}Nb_{1/2})$, $(In_{1/2}Nb_{1/2})$, $(Yb_{1/2}Nb_{1/2})$, $(Ho_{1/2}Nb_{1/2})$, $(Fe_{1/2}Ta_{1/2})$, $(Sc_{1/2}Ta_{1/2})$, $(Lu_{1/2}Nb_{1/2})$, $(Lu_{1/2}Ta_{1/2})$, $(Mg_{1/3}Nb_{2/3})$, $(Zn_{1/3}Nb_{2/3})$, $(Co_{1/3}Nb_{2/3})$, $(Ni_{1/3}Nb_{2/3})$, $(Mg_{1/3}Ta_{2/3})$, $(Co_{1/3}Ta_{2/3})$, $(Ni_{1/3}Ta_{2/3})$, $(Fe_{2/3}W_{1/3})$, $(Mn_{2/3}W_{1/3})$.

4. Temperatur- und Feuchtigkeits-Detektor nach Anspruch 1, bei dem das keramische Element eine Metalloxidkeramik aufweist, deren wesentlicher Bestandteil nach der allgemeinen Formel $ABO_3$ gebildet ist, worin AB eine Komponente ist, die mindestens einen der folgenden Bestandteile enthält: KTa, PbHf, LiTa, LiNb, CaTi, MgTi, BaZr, CaZr, SrZr, MgZr, PbZr, NaNb, KNb, PbTi.

*Fig. 1*

*Fig. 2*

*Fig. 3*

0013030

Fig. 4

Fig. 5

Fig. 6

2

Fig. 7

0 013 030

impedance (Ω) vs relative humidity (%)
20 °C
80 °C

Fig. 8

impedance (Ω) vs temperature (°C)

Fig. 9

impedance (Ω) vs frequency (Hz)
A
B
C
D

3

## Fig. 10

impedance (Ω) vs relative humidity (%)

## Fig. 11

impedance (Ω) vs temperature (°C)

## Fig. 12

impedance (Ω) vs frequency (Hz)

# Fig. 13

OSC-1    a
         S
OSC-2    b    SW
              c
              r    R

# Fig. 14

OSC-1
         mixer                    R3
OSC-2                                    terminal for detecting
                                         humidity
              C1          O·P           C2
         R1      R2              C3       terminal for detecting
                                         temperature
                                    R4

temperature and
humidity detecting
element

OSC-1
OSC-2

0013030